# EUROPEAN PATENT APPLICATION

(11) **EP 4 830 868 A1**
(43) Date of publication of application: **28.10.2026**
(21) Application number: 26174350.4
(22) Date of filing: 24.04.2026
(51) Int. Cl.: B24B 5/04, B24B 49/12, B24B 49/18, B24B 55/00

(54) **MACHINE TOOL AND METHOD OF CONTROLLING MACHINE TOOL**

(30) Priority: 25.04.2025 JP 2025073171; 04.02.2026 JP 2026016805
(71) Applicant: DMG Mori Co., Ltd., Nara-shi, Nara 630-8122 (JP)
(72) Inventor: OSASA, Katsuyoshi, Nara City, Nara, 630-8122 (JP); TANEMOTO, Minoru, Nara City, Nara, 630-8122 (JP)
(74) Representative: Isarpatent

(57) **Abstract**

A machine tool (100) includes a spindle (13) that rotates a grinding wheel that grinds a workpiece (W), a control device (500) that controls a rotation speed of the spindle (13), and a sensor (70, 80) that outputs a first signal to the control device (500) when a diameter of the grinding wheel (41) is equal to or smaller than a predetermined threshold value and outputs a second signal to the control device (500) when the diameter of the grinding wheel (41) is larger than the threshold value. The control device (500) sets an upper limit value of the rotation speed to a first upper limit value and controls the rotation speed not to exceed the first upper limit value when it receives the first signal from the sensor (70, 80). The control device (500) sets the upper limit value of the rotation speed to a second upper limit value smaller than the first upper limit value and controls the rotation speed not to exceed the second upper limit value when it receives the second signal from the sensor (70, 80). An allowable rotation speed (S) of the grinding wheel (41) is lower as the diameter of the grinding wheel (41) is larger. The first upper limit value is a value equal to or smaller than the allowable rotation speed (S) when the diameter of the grinding wheel (41) is equal to the threshold value.

## Description

### BACKGROUND OF THE INVENTION

### Field of the Invention

The present disclosure relates to a machine tool and a method of controlling a machine tool.

### Description of the Background Art

As shown in Japanese Patent No. 7635356, in a machine tool, a grinding wheel has conventionally been used for grinding a workpiece. Specifically, the grinding wheel is attached to a tool spindle and rotates with rotation of the tool spindle. As the grinding wheel is brought in contact with workpiece while the grinding wheel is rotating, the workpiece is ground.

### SUMMARY OF THE INVENTION

Currently, a user of the machine tool should manually set a rotation speed of the grinding wheel to be not higher than a predetermined maximum peripheral speed of the grinding wheel, in accordance with a dimension or a model of the grinding wheel. The rotation speed of the grinding wheel described previously, however, is a maximum allowable peripheral speed (which will be referred to as a "maximum peripheral speed in use" below) of the grinding wheel designated by a manufacturer of the grinding wheel, and it is not necessarily equal to or smaller than a maximum value of an allowable speed (which will be referred to as an "allowable rotation speed" below) determined by a manufacturer of a machine.

The present disclosure provides a machine tool and a method of controlling a machine tool, in which a rotation speed of a grinding wheel is automatically controllable to an allowable rotation speed or lower.

According to one aspect of the present disclosure, a machine tool includes a spindle that rotates a grinding wheel that grinds a workpiece, a control device that controls a rotation speed of the spindle, and a sensor that outputs a first signal to the control device when a diameter of the grinding wheel is equal to or smaller than a predetermined threshold value and outputs a second signal different from the first signal to the control device when the diameter of the grinding wheel is larger than the threshold value. When the control device receives the first signal from the sensor, the control device sets an upper limit value of the rotation speed to a first upper limit value and controls the rotation speed not to exceed the first upper limit value. When the control device receives the second signal from the sensor, the control device sets the upper limit value of the rotation speed to a second upper limit value smaller than the first upper limit value and controls the rotation speed not to exceed the second upper limit value. An allowable rotation speed of the grinding wheel is lower as the diameter of the grinding wheel is larger. The first upper limit value is a value equal to or smaller than the allowable rotation speed when the diameter of the grinding wheel is equal to the threshold value.

According to another aspect of the present disclosure, a method of controlling a machine tool includes a controlling, by a control device, a rotation speed of a spindle that rotates a grinding wheel that grinds a workpiece, outputting, by a sensor, a first signal to the control device when a diameter of the grinding wheel is equal to or smaller than a predetermined threshold value, and outputting, by the sensor, a second signal different from the first signal to the control device when the diameter of the grinding wheel is larger than the threshold value. The controlling a rotation speed includes setting, by the control device, an upper limit value of the rotation speed to a first upper limit value and controlling, by the control device, the rotation speed not to exceed the first upper limit value, based on output of the first signal from the sensor and setting, by the control device, the upper limit value of the rotation speed to a second upper limit value smaller than the first upper limit value and controlling, by the control device, the rotation speed not to exceed the second upper limit value, based on output of the second signal from the sensor. An allowable rotation speed of the grinding wheel is lower as the diameter of the grinding wheel is larger. The first upper limit value is a value equal to or smaller than the allowable rotation speed when the diameter of the grinding wheel is equal to the threshold value.

The foregoing and other objects, features, aspects and advantages of this invention will become more apparent from the following detailed description of this invention when taken in conjunction with the accompanying drawings.

### BRIEF DESCRIPTION OF THE DRAWINGS

Fig. 1 is a perspective view of a machine tool.
Fig. 2 is a diagram illustrating an internal space of the machine tool.
Fig. 3 is a perspective view of a grinding wheel, a tool holder, and a pot at a tool stand-by position.
Fig. 4 is a diagram illustrating sensing of a diameter of the grinding wheel.
Fig. 5 is a diagram for illustrating an allowable rotation speed and an upper limit value of a rotation speed in accordance with the diameter of the grinding wheel.
Fig. 6 is a block diagram for illustrating a functional configuration of a control device.
Fig. 7 is a flowchart for illustrating a flow of processing in the control device.
Fig. 8 is a diagram illustrating sensing of the diameter of the grinding wheel.
Fig. 9 is a diagram of the grinding wheel in Fig. 8 viewed in a +Z-axis direction.

### DESCRIPTION OF THE PREFERRED EMBODIMENTS

An embodiment according to the present invention will be described below with reference to the drawings. In the description below, the same components or constituent elements have the same reference characters allotted and their labels and functions are also the same. Therefore, detailed description thereof will not be repeated.

### (A. Overview of Machine Tool)

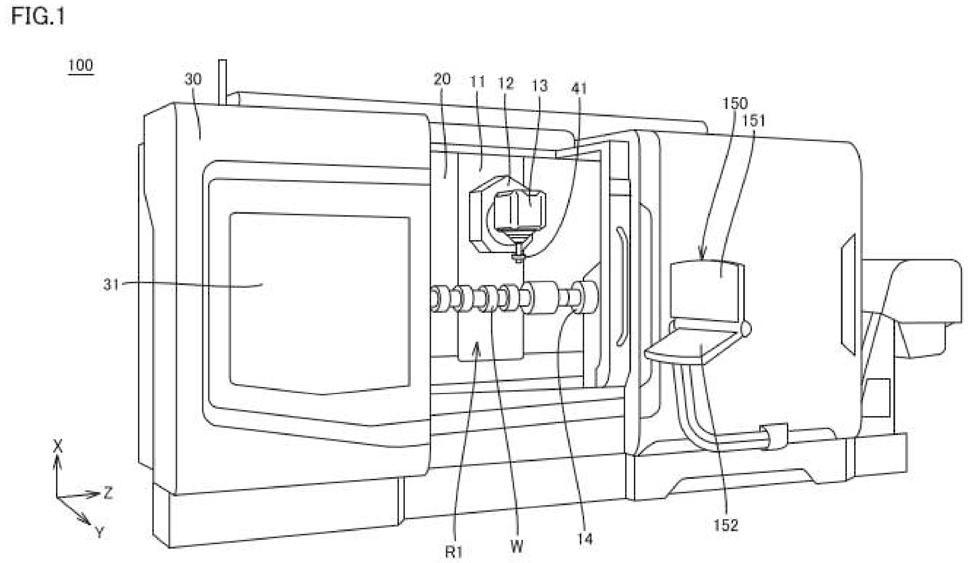

Fig. 1 is a perspective view of a machine tool according to the present embodiment. As shown in Fig. 1, an axis that is in parallel to a lateral direction (width direction) of a machine tool 100 and extends in a horizontal direction is herein referred to as a "Z axis," an axis that is in parallel to a forward-rearward direction (depth direction) of machine tool 100 and extends in the horizontal direction is referred to as a "Y axis," and an axis extending in an upward-downward direction is referred to as an "X axis."

Specifically, a right direction in Fig. 1 is referred to as a "+Z-axis direction" and a left direction is referred to as a "-Z-axis direction." A front direction on the sheet plane in Fig. 1 is referred to as a "+Y-axis direction" and a rear direction is referred to as a "-Y-axis direction." The +Y-axis direction corresponds to the front of a machine and the -Y-axis direction corresponds to the rear of the machine. An upward direction is referred to as a "+X-axis direction" and a downward direction is referred to as a "-X-axis direction."

Machine tool 100 is a multi-tasking machine in the present example. Machine tool 100 includes a column 11, a box body 12, a tool spindle 13, a workpiece spindle 14, a housing 20, a door 30, an operation apparatus 150, and a tool rest (not-shown). Machine tool 100 is not limited to the multi-tasking machine.

Column 11 is attached to housing 20. Column 11 is movable with respect to housing 20 in the Z direction. Column 11 is attached to a wall portion of housing 20 at a -Y-axis direction side.

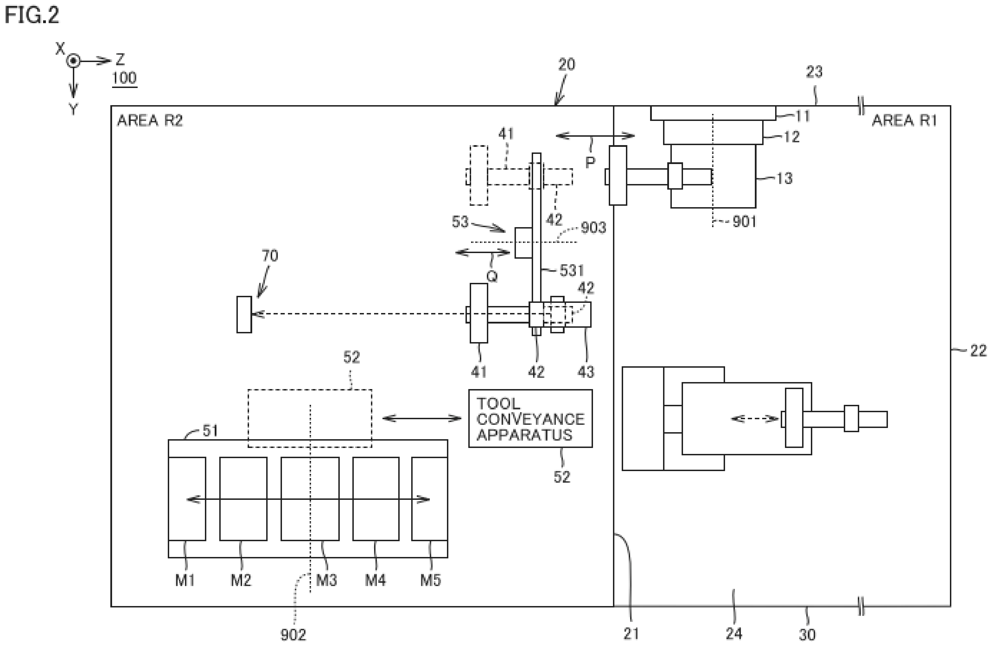

Box body 12 is attached to column 11. Box body 12 is movable with respect to column 11 in the X-axis direction. Tool spindle 13 is attached to box body 12. Tool spindle 13 is attached to box body 12 at a side opposite to column 11. Box body 12 can rotate tool spindle 13 around an axis 901 (see Fig. 2) that rotates around the Y axis, axis 901 being called a "B axis."

Tool spindle 13 holds a tool and rotates the tool. Fig. 1 shows a grinding wheel 41 as an exemplary tool. A position and a posture of tool spindle 13 can be varied by column 11 and box body 12. Workpiece spindle 14 holds workpiece W and rotates workpiece W.

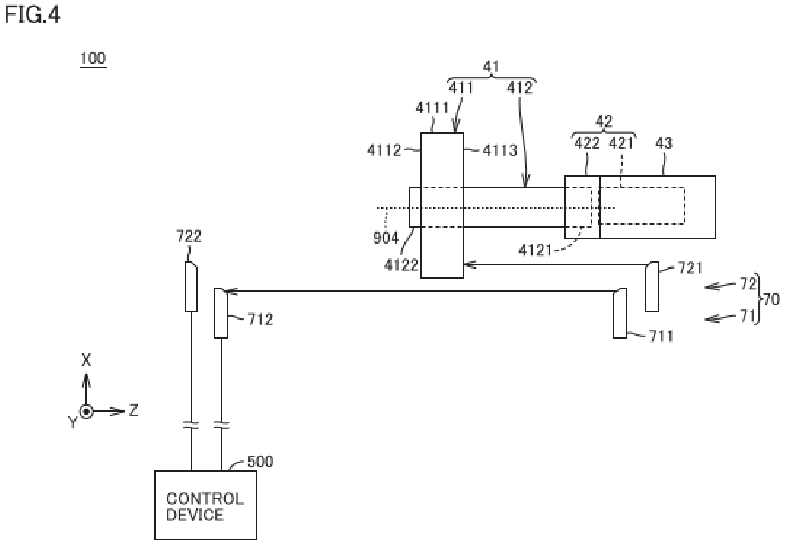

Column 11, box body 12, tool spindle 13, and workpiece spindle 14 are controlled by a control device 500 (Fig. 4) which will be described later.

Door 30 is slidable with respect to housing 20 in the Z direction. Door 30 includes a splash guard 31. Splash guard 31 is transparent such that a user of machine tool 100 can visually recognize the inside of a work area. Splash guard 31 is made of acrylic resin. Specifically, splash guard 31 is formed of polycarbonate.

Operation apparatus 150 includes touch screens 151 and 152. Operation apparatus 150 receives a user input through touch screens 151 and 152. In operation apparatus 150, various types of information are shown on touch screens 151 and 152. Each of touch screens 151 and 152 includes a display and a touch panel.

Fig. 2 is a diagram illustrating an internal space of machine tool 100. As shown in Fig. 2, machine tool 100 includes an area R1 and an area R2.

Area R1 will initially be described. Area R1 is an area (a work area or a machining area) where a workpiece is subjected to working (including grinding). Area R2 is an area outside the work area. In area R2, a tool to be attached to tool spindle 13 is replaced.

Area R1 is constituted of sidewall portions 21, 22, and 23, a bottom surface portion 24, a top surface portion (not-shown), and door 30. Sidewall portion 21 serves as a partition between area R1 and area R2. Sidewall portion 21 is provided with a door (not-shown) that can be opened and closed. The door is opened in replacement of a tool to be attached to tool spindle 13. The tool is attached to tool spindle 13 with a tool holder being interposed.

While the door is open, tool spindle 13 (specifically, a part at a tip end side) moves between area R1 and area R2 in the Z-axis direction as shown with an arrow P. In replacement of the tool, tool spindle 13 initially moves in the -Z direction, and after the tool is replaced, it moves in the +Z direction. As replacement of the tool ends, the door is closed.

Sidewall portion 22 is opposed to sidewall portion 21 at a side opposite to area R2. Column 11 is set at sidewall portion 23. The top surface portion is opposed to bottom surface portion 24. Sidewall portions 21, 22, and 23, bottom surface portion 24, the top surface portion (not-shown), and door 30 form what is called a "grinding wheel guard."

Sidewall portions 21, 22, and 23, bottom surface portion 24, and the top surface portion are each formed from a steel plate. A portion of door 30 except for splash guard 31 is also formed from a steel plate. In the present example, a numerical value of a thickness of an actual structure is referred to in connection with thicknesses of these steel plates and splash guard 31.

Area R2 will now be described. In area R2, a tool magazine 51, a tool conveyance apparatus 52, an automatic tool changer (ATC) 53 are set. Automatic tool changer 53 includes an ATC arm 531.

In tool magazine 51, various tools are set together with a tool holder and a pot. Tool magazine 51 includes a plurality of pot holders M1, M2, M3, M4, M5, ... In pot holders M1, M2, M3, M4, M5, ..., various tools are accommodated together with the tool holder and the pot. Specifically, each tool is held by the tool holder. In tool magazine 51, the tool holder is accommodated in the pot. The pot is equipment that conveys the tool and the tool holder.

Tool magazine 51 is an endless conveyor that conveys a designated tool to a tool conveyance position (a position of pot holder M3 in Fig. 2). Tool magazine 51 is in a shape extending in the X-axis direction (upward-downward direction). Fig. 2 shows a curved portion at an upper side of tool magazine 51. Pot holders M1, M2, M3, M4, and M5 are rotatable by 180 degrees around an axis 902. Pot holders M1, M2, M3, M4, and M5 are movable also in the X direction.

Tool conveyance apparatus 52 conveys a tool (for example, grinding wheel 41) conveyed to the tool conveyance position of tool magazine 51 to a tool stand-by position. Specifically, tool conveyance apparatus 52 conveys the tool (grinding wheel 41 in the present example) and a tool holder 42 to the tool stand-by position by holding a pot 43. In Fig. 2, positions of grinding wheel 41 and tool holder 42 shown with a solid line are the "tool stand-by position."

ATC arm 531 holds tool holder 42. Specifically, ATC arm 531 holds a portion of tool holder 42 located out of pot 43. More specifically, ATC arm 531 holds a front end portion 422 (Fig. 4) of the tool holder.

ATC arm 531 replaces the tool attached to tool spindle 13, by holding at one end, the tool holder (tool holder 42 to which grinding wheel 41 has been attached in the aspect of the present example) to which a tool to be used in next working has been attached and holding at the other end, the tool holder to which a used tool (for example, a cutting tool) has been attached.

Specifically, ATC arm 531 is movable in the Z-axis direction as shown with an arrow Q. ATC arm 531 is rotatable around an axis 903. An operation to replace the tool will be described below.

ATC arm 531 draws grinding wheel 41 and tool holder 42 out of pot 43 by moving in the -Z-axis direction. At that time, ATC arm 531 simultaneously draws together with the tool, the tool holder attached to tool spindle 13 out of tool spindle 13.

ATC arm 531 conveys grinding wheel 41 and tool holder 42 from the tool stand-by position described above to a tool replacement position by rotating around axis 903. ATC arm 531, on the other hand, conveys the tool drawn out of tool spindle 13 and the tool holder from the tool replacement position to the tool stand-by position by rotating around such an axis 903. Positions of grinding wheel 41 and tool holder 42 shown with a dashed line in Fig. 2 are the tool replacement position.

As ATC arm 531 then moves in the +Z-axis direction, it attaches grinding wheel 41 and tool holder 42 to tool spindle 13. ATC arm 531, as a result of movement thereof, puts the tool drawn out of tool spindle 13 and the tool holder into pot 43 left at the tool stand-by position. The tool and the tool holder accommodated in pot 43 are conveyed by tool conveyance apparatus 52 to a pot holder in tool magazine 51.

Tool magazine 51, tool conveyance apparatus 52, and automatic tool changer 53 are controlled by control device 500.

### (B. Grinding Wheel)

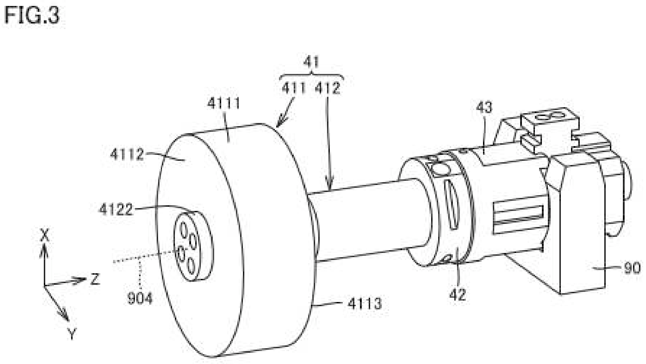

Fig. 3 is a perspective view of grinding wheel 41, tool holder 42, and pot 43 at the tool stand-by position. As shown in Fig. 3, grinding wheel 41 is held by tool holder 42. Tool holder 42 is accommodated in pot 43. Specifically, a rear end portion 421 (Fig. 4) of tool holder 42 is accommodated in pot 43. Pot 43 is fixed to a fixing jig 90. In this state, only grinding wheel 41 and tool holder 42 among grinding wheel 41, tool holder 42, and pot 43 are conveyed by ATC arm 531 (Fig. 2) from the tool stand-by position to the tool replacement position.

Grinding wheel 41 includes a main body portion 411 and a shank portion 412. Main body portion 411 is attached to shank portion 412. Shank portion 412 extends like a rod around an axis 904. Shank portion 412 includes an end 4122 at a side of main body portion 411 and an end 4121 (Fig. 4) at a side of tool holder 42.

Grinding wheel 41 is held by tool holder 42. Specifically, shank portion 412 is held by tool holder 42. More specifically, end 4121 is held by tool holder 42. In area R1, while grinding wheel 41 is held by tool holder 42 at tool spindle 13, tool holder 42 rotates. Shank portion 412 thus rotates around axis 904. Furthermore, as shank portion 412 rotates, main body portion 411 also rotates.

Main body portion 411 is provided with an outer circumferential surface 4111 that comes in contact with workpiece W in grinding of workpiece W and surfaces 4112 and 4113 that are contiguous to outer circumferential surface 4111 and extend in a radial direction of grinding wheel 41 (specifically, main body portion 411). In the present example, surfaces 4112 and 4113 are each in a form of a ring. While main body portion 411 rotates, workpiece W is ground. Specifically, as main body portion 411 rotates while outer circumferential surface 4111 is in contact with workpiece W, workpiece W is ground.

At the tool stand-by position, grinding wheel 41 is arranged such that axis 904 is in parallel to the Z-axis direction. At the tool stand-by position, a direction of normal to surfaces 4112 and 4113 is in parallel to the Z-axis direction.

### (C. Sensing)

Fig. 4 is a diagram illustrating sensing of a diameter of grinding wheel 41. Fig. 4 is a diagram of grinding wheel 41, tool holder 42, and pot 43 viewed laterally. The diameter of grinding wheel 41 is sensed when grinding wheel 41 is located at the tool stand-by position where all tools pass.

As shown in Fig. 4, machine tool 100 includes control device 500 and a sensor 70. Control device 500 includes a numerical control device, a PLC, a servo control unit, a communication unit, and a data holding unit, none of which are shown. A work program (an NC program) is stored in the data holding unit.

Sensor 70 emits a laser beam to grinding wheel 41 conveyed to the tool stand-by position. Sensor 70 is a transmission type sensor. Sensor 70 is used for determining in which of three numerical ranges delimited by two threshold values (100 mm and 130 mm in the present example) the diameter (which is also referred to as a "diameter D" below) of grinding wheel 41 is included. In the present example, the three numerical ranges are "D > 130 mm," "130 mm ≥ D > 100 mm," and "100 mm ≥ D."

Sensor 70 includes a first sensor 71 and a second sensor 72. First sensor 71 includes a light emitter 711 and a light receiver 712. Second sensor 72 includes a light emitter 721 and a light receiver 722. When a side of light emitters 711 and 721 is viewed from a side of light receivers 712 and 722, second sensor 72 is located closer to axis (rotation axis) 904 of grinding wheel 41 than first sensor 71.

In the present example, light emitters 711 and 721 are arranged below pot 43. Light emitters 711 and 721 may be arranged below tool holder 42. Light emitters 711 and 721 may be arranged below shank portion 412. Arrangement of light emitters 711 and 721 is not limited to arrangement below pot 43, tool holder 42, or shank portion 412, and they should only be arranged around pot 43, tool holder 42, or shank portion 412 (for example, above, in the +Y-axis direction, or in the -Y-axis direction).

Light emitters 711 and 721 each emit a laser beam in the -Z-axis direction. Light emitters 711 and 721 each emit a laser beam in a direction in parallel to axis 904. Light receiver 712 is arranged at a position of reception of a laser beam emitted from light emitter 711. Light receiver 722 is arranged at a position of reception of a laser beam emitted from light emitter 721. Light receivers 712 and 722 are connected to control device 500.

In the present example, when light receiver 712 receives a laser beam emitted from light emitter 711, it sends a prescribed signal (which will also referred to as a "signal #1" below) to control device 500. For example, light receiver 712 sends an electrical signal having a voltage set to a first voltage V1 to control device 500. When light receiver 712 fails to receive a laser beam emitted from light emitter 711 due to cut-off by grinding wheel 41, it sends a signal (which will also be referred to as a "signal #2" below) different from signal #1 to control device 500. For example, light receiver 712 sends an electrical signal having a voltage set to a second voltage V2 to control device 500.

When light receiver 722 receives a laser beam emitted from light emitter 721, it sends a signal (which will also be referred to as a "signal #3" below) similar to signal #1 to control device 500. When light receiver 722 fails to receive a laser beam emitted from light emitter 721 due to cut-off by grinding wheel 41, it sends a signal (which will also be referred to as a "signal #4" below) similar to signal #2 to control device 500. Control device 500 manages the signal from light receiver 712 and the signal from light receiver 722 as being distinguished from each other.

First sensor 71 (specifically, light emitter 711 and light receiver 712) is arranged at a position where light receiver 712 is unable to receive a laser beam emitted from light emitter 711 when diameter (outer diameter) D of grinding wheel 41 is larger than 130 mm.

Second sensor 72 (specifically, light emitter 721 and light receiver 722) is arranged at a position where light receiver 722 is unable to receive a laser beam emitted from light emitter 721 when diameter D of grinding wheel 41 is larger than 100 mm.

When control device 500 receives signal #1 from light receiver 712 and receives signal #3 from light receiver 722, it determines that diameter D of grinding wheel 41 is equal to or smaller than 100 mm. In other words, when each of light receiver 712 and light receiver 722 receives a laser beam, control device 500 determines that diameter D of grinding wheel 41 is equal to or smaller than 100 mm. When control device 500 receives signal #3 from light receiver 722, it may determine that diameter D of grinding wheel 41 is equal to or smaller than 100 mm regardless of the type of the signal sent from light receiver 712.

When control device 500 receives signal #1 from light receiver 712 and receives signal #4 from light receiver 722 (a state in Fig. 4), it determines that diameter D of grinding wheel 41 is larger than 100 mm and equal to or smaller than 130 mm. In other words, when control device 500 simultaneously receives signal #1 and signal #4 as shown in the state in Fig. 4, it determines that diameter D of grinding wheel 41 is larger than 100 mm and equal to or smaller than 130 mm.

When control device 500 receives signal #2 from light receiver 712 and receives signal #4 from light receiver 722, it determines that diameter D of grinding wheel 41 is larger than 130 mm. Machine tool 100 is configured such that a grinding wheel having diameter D larger than 130 mm is not automatically replaceable in area R2. Therefore, control device 500 has an error (warning) shown at operation apparatus 150. When control device 500 receives signal #2 from light receiver 712, it may determine that diameter D of grinding wheel 41 is larger than 130 mm regardless of the type of the signal sent from light receiver 722.

Light emitter 711 and light receiver 712 may be arranged in a reverse manner. Similarly, light emitter 721 and light receiver 722 may be arranged in a reverse manner.

### (D. Control of Rotation Speed of Grinding Wheel)

### (d1: Allowable Rotation Speed)

In the present example, a rotation speed of tool spindle 13 is expressed as the number of rotations per minute. A highest rotation speed of tool spindle 13 is set to 20,000/min. below for the sake of convenience of description. Requirements are defined for a grinding wheel, for example, under Japanese Industrial Standards (JIS) (JIS B 6033: 2018). An allowable rotation speed of the grinding wheel that satisfies the requirements will be described below. Though details will be described later, the allowable rotation speed is determined in accordance with the diameter of the grinding wheel.

According to "JIS B 6033: 2018" (which will simply be referred to as "JIS" below), a necessary thickness tₚ of a steel plate and translation energy Eₜᵣₐₙₛ of a fragment of the grinding wheel are defined as in expressions (1) and (2) below. ${t}_{p} = 0.4 \times {{E}_{trans}}^{0.37}$ (1) ${E}_{trans} = 0.051 \times m \times {\left(1-{Q}^{3}\right)}^{2} / {\left(1-{Q}^{2}\right)}^{2} \times {ν}^{2}$ (2)

m represents a mass [kg] of the grinding wheel. Q represents a ratio of the diameter [-]. ν represents a peripheral speed [m/sec.] in use of the grinding wheel.

JIS defines that Q is set to Q = 0.2 (a maximum diameter of the tool that is used being set to ϕ 130 mm) when the grinding wheel has the diameter equal to or smaller than 508 mm. With this numerical value, the expression of ν can be simplified as in an expression (3) below. ${ν}^{2} \approx {\left({t}_{p}/0.4\right)}^{1 / 0.37} / \left(0.054457\times m\right)$ (3)

Thickness tₚ of the steel plate is defined by a machine. Therefore, an available peripheral speed v in use (with the plate thickness being fixed) can be defined by mass m of the grinding wheel.

JIS makes it obligatory to monitor a reduced speed of the spindle. According to JIS, the "reduced speed" should be set as a machine parameter. In a machine tool, in restriction of the rotation speed by a numerical control (NC) apparatus, the value of mass m described above should be calculated. A form defined under JIS is a grinding wheel in a cylindrical shape, and calculation is done on the assumption that a diameter of a mating part is the diameter of the grinding wheel × 0.2 (Q). A density ρ of the grinding wheel is defined as 2.4 g/cm³. Therefore, in order to calculate mass m, a volume of the grinding wheel should be calculated.

The grinding wheel (specifically, the main body portion) is in a cylindrical shape. With D representing the diameter of the grinding wheel and H representing a thickness of the grinding wheel, a volume V of the grinding wheel is expressed in an expression (4) below. $V = π \times \left\{{\left(D/2\right)}^{2}-{\left(D\times 0.2/2\right)}^{2}\right\} \times H$ (4)

An allowable rotation speed S is calculated by calculating mass m corresponding to diameter D of the grinding wheel and defining with mass m as above. Allowable rotation speed S is expressed, for example, in an expression (5) below. $\begin{matrix}S = ν \times 60 \times 1000 / \left(π\times D\right) \\ = 6 , 974 , 310 \times {\left(1/m\right)}^{1 / 2} / \left(π\times D\right)\end{matrix}$ (5)

Allowable rotation speed S is thus a function of diameter D of the grinding wheel. As thickness H of the grinding wheel is determined, mass m is also determined. Grinding wheel 41 is assumed to have the thickness of 65 mm below. This thickness is by way of example.

### (d2: Setting of Upper Limit Value and Control of Rotation Speed)

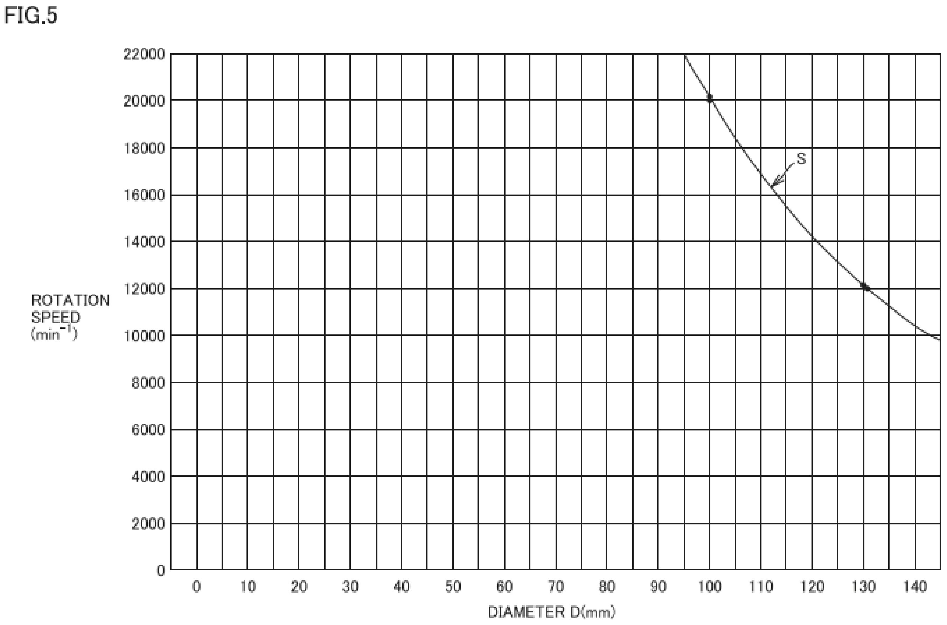

Fig. 5 is a diagram for illustrating allowable rotation speed S and the upper limit value of the rotation speed in accordance with diameter D of grinding wheel 41. As shown in Fig. 5, allowable rotation speed S is lower as diameter D of grinding wheel 41 is larger. In a region where diameter D of grinding wheel 41 is equal to or smaller than 95 mm, allowable rotation speed S exceeds 22,000/min. and hence it is not shown.

As described above, the highest rotation speed of tool spindle 13 is 20,000/min. A maximum diameter (diameter) of grinding wheel 41 replaceable by ATC arm 531 is 130 mm.

Allowable rotation speed S in an example where diameter D of grinding wheel 41 is 100 mm is 20,418/min. based on the expression (5). Allowable rotation speed S in the example where diameter D of grinding wheel 41 is 100 mm is thus higher than the highest rotation speed (20,000/min.) of tool spindle 13. Similarly, allowable rotation speed S in an example where diameter D of grinding wheel 41 is 130 mm is at least higher than 12,000/min.

Then, in the present example, in an example where diameter D of grinding wheel 41 is equal to or smaller than 100 mm, control device 500 sets the upper limit value of the rotation speed of tool spindle 13 to 20,000/min. In an example where diameter D of grinding wheel 41 is larger than 100 mm and equal to or smaller than 130 mm, control device 500 sets the upper limit value of the rotation speed of tool spindle 13 to 12,000/min.

Control device 500 determines whether or not diameter D of grinding wheel 41 is equal to or smaller than 100 mm based on an output from second sensor 72. Control device 500 determines whether or not diameter D of grinding wheel 41 is equal to or smaller than 130 mm based on an output from first sensor 71. Specifically, in the present example, control device 500 determines in which of the three numerical ranges described above diameter D of grinding wheel 41 is included, based on combination of outputs from first and second sensors 71 and 72.

Relation between diameter D of grinding wheel 41 and an upper limit value U of the rotation speed of tool spindle 13 is thus expressed in expressions (6) and (7) below. $U = 20 , 000 / min . \left(D\leq 100 mm\right)$ (6) $U = 12 , 000 / min . \left(100 mm<D\leq 130 mm\right)$ (7)

Control device 500 controls the rotation speed of tool spindle 13 to be equal to or lower than allowable rotation speed S determined in accordance with diameter D of grinding wheel 41, based on a signal from sensor 70 (specifically, first and second sensors 71 and 72). Specifically, control device 500 sets upper limit value U equal to or smaller than allowable rotation speed S, based on the signal. Control device 500 controls the rotation speed of tool spindle 13 not to exceed upper limit value U.

In the present example, when diameter D of grinding wheel 41 is equal to or smaller than 100 mm, control device 500 sets upper limit value U to the highest rotation speed (20,000/min.) of tool spindle 13. When diameter D of grinding wheel 41 is larger than 100 mm (in the present example, additionally, when grinding wheel 41 has the diameter equal to or smaller than 130 mm), control device 500 sets upper limit value U to a predetermined value (12,000/min.) lower than the highest rotation speed. The value of upper limit value U described above is by way of example, and limitation thereto is not intended.

### (d3: Functional Configuration)

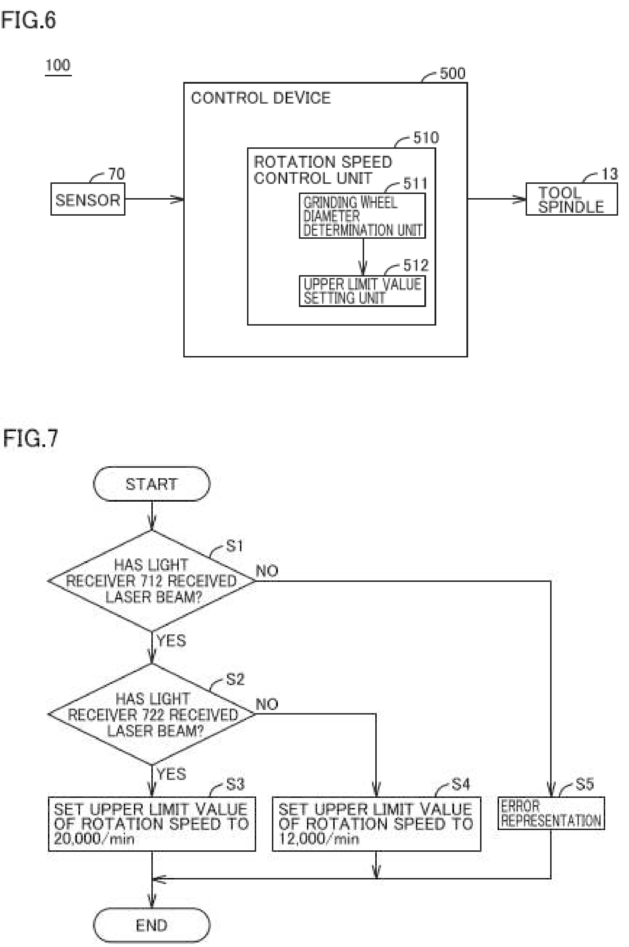

Fig. 6 is a block diagram for illustrating mainly a functional configuration of control device 500. As shown in Fig. 6, control device 500 includes a rotation speed control unit 510. Rotation speed control unit 510 includes a grinding wheel diameter determination unit 511 and an upper limit value setting unit 512.

Rotation speed control unit 510 controls the rotation speed of tool spindle 13. Grinding wheel diameter determination unit 511 determines diameter D of grinding wheel 41 based on the output from sensor 70 (first and second sensors 71 and 72 in the present example). In the present example, grinding wheel diameter determination unit 511 determines whether diameter D of the grinding wheel is equal to or smaller than 100 mm, larger than 100 mm and equal to or smaller than 130 mm, or larger than 130 mm. Grinding wheel diameter determination unit 511 determines the numerical range in which diameter D of grinding wheel 41 is included, from among the three numerical ranges.

Upper limit value setting unit 512 sets upper limit value U in accordance with diameter D of grinding wheel 41. In the present example, upper limit value setting unit 512 sets upper limit value U to one of 20,000/min. and 12,000/min. Rotation speed control unit 510 controls the rotation speed of tool spindle 13 not to exceed upper limit value U described above.

### (d4: Control Structure)

Fig. 7 is a flowchart for illustrating a flow of processing in control device 500. As shown in Fig. 7, in step S1, control device 500 determines whether or not light receiver 712 of first sensor 71 receives a laser beam. Specifically, control device 500 determines which of signal #1 and signal #2 the light receiver receives.

When control device 500 determines that light receiver 712 does not receive a laser beam (NO in step S1), in step S5, it has operation apparatus 150 provide prescribed error representation. Specifically, when control device 500 receives signal #2 from light receiver 712, it has the process proceed to step S5.

When control device 500 determines that light receiver 712 receives a laser beam (YES in step S1), in step S2, it determines whether or not light receiver 722 of second sensor 72 receives a laser beam. Specifically, when control device 500 receives signal #1 from light receiver 712, it has the process proceed to step S2.

When control device 500 determines that light receiver 722 receives a laser beam (YES in step S2), in step S3, it sets upper limit value U of the rotation speed of grinding wheel 41 to 20,000/min. Specifically, when control device 500 receives signal #3 in addition to signal #1 from light receiver 722, it has the process proceed to step S3. When control device 500 thus simultaneously receives signal #1 and signal #3, it sets upper limit value U to 20,000/min. In this case, control device 500 controls the rotation speed of tool spindle 13 not to exceed 20,000/min. described above.

When control device 500 determines that light receiver 722 does not receive a laser beam (NO in step S2), in step S4, it sets upper limit value U of the rotation speed of grinding wheel 41 to 12,000/min. Specifically, when control device 500 receives signal #4 in addition to signal #1 from light receiver 722, it has the process proceed to step S4. When control device 500 thus simultaneously receives signal #1 and signal #4, it sets upper limit value U to 12,000/min. In this case, control device 500 controls the rotation speed of tool spindle 13 not to exceed 12,000/min. described above.

Control device 500 thus carries out different control based on combination of outputs from first and second sensors 71 and 72. When control device 500 receives signal #3 from second sensor 72, it may set upper limit value U to 20,000/min., regardless of the type of the signal sent from first sensor 71.

### <Summary>

(1) Machine tool 100 includes tool spindle 13 that rotates grinding wheel 41 that grinds workpiece W, control device 500 that controls the rotation speed of tool spindle 13, and sensor 70. Sensor 70 includes first sensor 71 that outputs signal #1 to control device 500 when diameter D of grinding wheel 41 is equal to or smaller than 130 mm and outputs signal #2 to control device 500 when diameter D of grinding wheel 41 is larger than 130 mm and second sensor 72 that outputs signal #3 to control device 500 when diameter D of grinding wheel 41 is equal to or smaller than 100 mm and outputs signal #4 to control device 500 when diameter D of grinding wheel 41 is larger than 100 mm.

Machine tool 100 thus includes sensor 70 that (i) outputs signal #2 and signal #4 to control device 500 when diameter D of grinding wheel 41 is larger than 130 mm, (ii) outputs signal #1 and signal #4 to control device 500 when diameter D of grinding wheel 41 is equal to or smaller than 130 mm and larger than 100 mm, and (iii) outputs signal #1 and signal #3 to control device 500 when diameter D of grinding wheel 41 is equal to or smaller than 100 mm.

When control device 500 receives the signals #1 and #3 from sensor 70, it sets upper limit value U of the rotation speed of tool spindle 13 to 20,000/min. (first upper limit value) and controls the rotation speed of tool spindle 13 not to exceed 20,000/min.

When control device 500 receives the signals #1 and #4 from sensor 70, it sets upper limit value U of the rotation speed of tool spindle 13 to 12,000/min. (second upper limit value) and controls the rotation speed of tool spindle 13 not to exceed 12,000/min.

Allowable rotation speed S of grinding wheel 41 is lower as diameter D of grinding wheel 41 is larger. The rotation speed of 20,000/min. (first upper limit value) is a value equal to or smaller than allowable rotation speed S when diameter D of grinding wheel 41 is 100 mm. The rotation speed of 12,000/min. (second upper limit value) is a value equal to or smaller than allowable rotation speed S when diameter D of grinding wheel 41 is a maximum diameter (130 mm in the present example) up to which grinding wheel 41 is replaceable by automatic tool changer 53.

According to such a configuration, the rotation speed of grinding wheel 41 is automatically controllable to be equal to or lower than allowable rotation speed S determined in accordance with diameter D of grinding wheel 41.

In the present example, combination of signal #1 and signal #3 corresponds to the "first signal" in the present disclosure and combination of signal #1 and signal #4 corresponds to the "second signal" in the present disclosure.

(2) Grinding wheel 41 includes shank portion 412 that extends like a rod around prescribed axis 904 and rotates around prescribed axis 904 and main body portion 411 attached to shank portion 412, main body portion 411 grinding workpiece W. Sensor 70 emits a laser beam to main body portion 411, in parallel to prescribed axis 904. According to such a configuration, control device 500 can obtain different signals when diameter D of grinding wheel 41 is equal to or smaller than 100 mm, when it is larger than 100 mm and equal to or smaller than 130 mm, and when it is larger than 130 mm.

(3) Machine tool 100 further includes automatic tool changer 53, tool magazine 51 where grinding wheel 41 can be accommodated, and tool conveyance apparatus 52 that conveys grinding wheel 41 from tool magazine 51 to the tool stand-by position of automatic tool changer 53. Sensor 70 emits a laser beam to grinding wheel 41 conveyed to the tool stand-by position.

According to such a configuration, diameter D of grinding wheel 41 can be measured at the tool stand-by position. Specifically, in which of the three numerical ranges described above diameter D is included can be determined. Therefore, time does not have to be secured only for measurement of diameter D of grinding wheel 41. Therefore, a lead time required for working of workpiece W can be shorter than in measurement of the diameter of grinding wheel 41 after grinding wheel 41 moved to area R1 where workpiece W is to be worked.

(4) Main body portion 411 includes outer circumferential surface 4111 that comes in contact with workpiece W in grinding of workpiece W and surfaces 4112 and 4113 that are contiguous to outer circumferential surface 4111 and extend in the radial direction of grinding wheel 41. Sensor 70 emits a laser beam toward surface 4113.

Depending on the type of grinding wheel 41, a Z-axis direction position of main body portion 411 at the tool stand-by position is different. Therefore, in emission of a laser beam to outer circumferential surface 4111, a plurality of sensors should be set in the Z-axis direction or the sensor should be movable in the Z-axis direction. Machine tool 100 is configured to emit a laser beam toward surface 4113, so that an apparatus configuration of the sensor can be more simplified than in a configuration where a laser beam is emitted to outer circumferential surface 4111.

(5) First sensor 71 includes light emitter 711 that emits a laser beam and light receiver 712 that receives the laser beam. When light receiver 712 receives a laser beam, first sensor 71 outputs signal #1 to control device 500. When light receiver 712 does not receive a laser beam, first sensor 71 outputs signal #2 to control device 500. Similarly, second sensor 72 includes light emitter 721 that emits a laser beam and light receiver 722 that receives the laser beam. When light receiver 722 receives a laser beam, second sensor 72 outputs signal #3 to control device 500. When light receiver 722 does not receive a laser beam, second sensor 72 outputs signal #4 to control device 500.

(6) When diameter D of grinding wheel 41 is 100 mm, allowable rotation speed S is higher than the highest rotation speed (20,000/min.) of tool spindle 13. When control device 500 receives signals #1 and #3 from sensor 70, it sets the highest rotation speed as upper limit value U (first upper limit value) of tool spindle 13.

### <Modification>

(1) The configuration in which machine tool 100 includes sensor 70 is described above by way of example. Specifically, sensor 70 including first and second sensors 71 and 72 each of which emits one laser beam is described by way of example. A configuration in which machine tool 100 includes a line sensor 80 instead of sensor 70 will be described below.

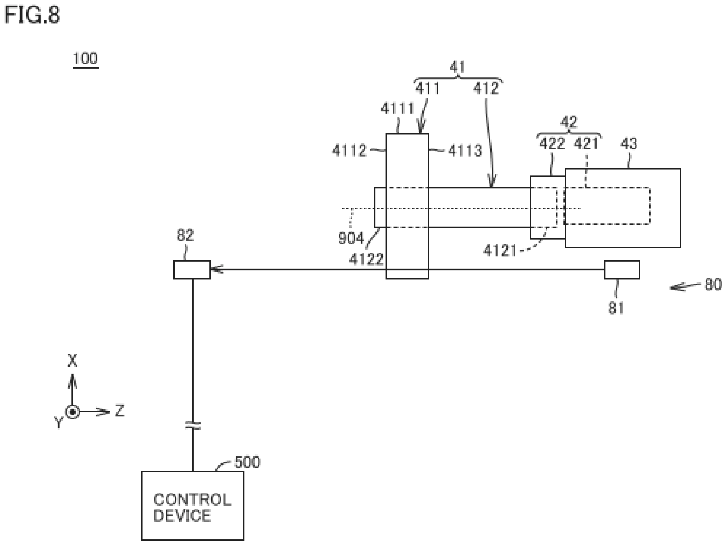

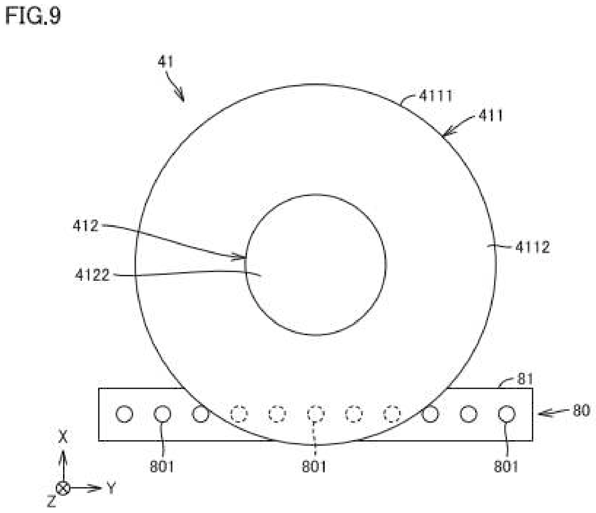

Fig. 8 is a diagram illustrating sensing of the diameter of grinding wheel 41, similarly to Fig. 4. Fig. 8 is a diagram of grinding wheel 41, tool holder 42, and pot 43 viewed laterally. Fig. 9 is a diagram of grinding wheel 41 in Fig. 8 viewed in the +Z-axis direction.

Referring to Figs. 8 and 9, line sensor 80 includes a light emitter 81 and a light receiver 82. Light emitter 81 includes a plurality of laser beam emitters 801 as shown in Fig. 9. The plurality of laser beam emitters 801 are arranged in a line along the Y-axis direction. In the present example, the plurality of laser beam emitters 801 are aligned at regular intervals. Light receiver 82 includes a plurality of laser beam receivers (not-shown).

In the present example, light emitter 81 is arranged below pot 43. Light emitter 81 may be arranged below tool holder 42. Light emitter 81 may be arranged below shank portion 412. Arrangement of light emitter 81 is not limited to arrangement below pot 43, tool holder 42, or shank portion 412, and it should only be arranged around pot 43, tool holder 42, or shank portion 412 (for example, above, in the +Y-axis direction, or in the -Y-axis direction).

Light emitter 81 emits a plurality of laser beams in the -Z-axis direction. Light emitter 81 emits laser beams in a direction in parallel to axis 904. Light receiver 82 is arranged at a position of reception of the plurality of laser beams emitted from light emitter 81. The laser beam receivers of light receiver 82 are opposed to respective different laser beam emitters 801 in the Z-axis direction. Light receiver 82 is connected to control device 500.

In the example shown in Fig. 9, at least one of a plurality of laser beams emitted from the plurality of laser beam emitters 801 is cut off by main body portion 411 of grinding wheel 41. Specifically, at least one of the plurality of laser beams is cut off by surface 4113 (Fig. 8) on the back of surface 4112. For example, in the present example, five central laser beams of eleven laser beams are cut off. In this case, six laser beam receivers at opposing ends among the plurality of laser beam receivers of light receiver 82 receive laser beams.

Control device 500 determines diameter D of grinding wheel 41 based on the number of laser beams received by light receiver 82. Specifically, control device 500 determines in which numerical range among the plurality of numerical ranges diameter D of the grinding wheel is included. In order to enable determination that diameter D of grinding wheel 41 is equal to or smaller than 100 mm and that it is equal to or smaller than 130 mm, at least 100 mm and 130 mm are included as boundaries between the plurality of numerical ranges.

As set forth above, the sensor in the present modification is laser type line sensor 80 and includes light emitter 81 that emits a plurality of laser beams and light receiver 82 that receives each laser beam. Control device 500 specifies the numerical range in which diameter D of grinding wheel 41 is included, based on the number of laser beams received by light receiver 82 among the plurality of laser beams.

(2) Though the configuration in which two upper limit values U are set is described above by way of example, limitation as such is not intended. In an example where diameter D of grinding wheel 41 is larger than a first threshold value (100 mm in the present example), on condition that the rotation speed is equal to or lower than allowable rotation speed S, upper limit value U may be varied stepwise in accordance with the numerical range above.
Specifically, upper limit value U may be made smaller as diameter D of grinding wheel 41 is larger.

(3) Though the configuration in which machine tool 100 includes only first and second sensors 71 and 72 as sensor 70 is described above by way of example, limitation as such is not intended. Sensor 70 may include yet another sensor. In this case, a threshold value other than 100 mm and 130 mm can be set. Therefore, in this case, the rotation speed of tool spindle 13 can more finely be controlled.

For example, with incorporation of a sensor that outputs a signal #5 when diameter D of grinding wheel 41 is larger than a prescribed numerical value (for example, 115 mm) between 100 mm and 130 mm and outputs a signal #6 when the diameter is smaller than the prescribed numerical value, an upper limit value (for example, 15,000/min.) intermediate between 20,000/min. (first upper limit value) and 12,000/min. (second upper limit value) can further be set.

(4) Though the configuration in which machine tool 100 includes first and second sensors 71 and 72 as sensor 70 is described above by way of example, limitation as such is not intended. Machine tool 100 may include, for example, only second sensor 72. At least with second sensor 72, whether diameter D of grinding wheel 41 is equal to or smaller than 100 mm or larger than 100 mm can be determined. In such a case, machine tool 100 can be concluded as being configured as below.

Machine tool 100 includes tool spindle 13 that rotates grinding wheel 41 that grinds workpiece W, control device 500 that controls the rotation speed of tool spindle 13, and second sensor 72 that outputs signal #3 to control device 500 when diameter D of grinding wheel 41 is equal to or smaller than 100 mm and outputs signal #4 to control device 500 when diameter D of grinding wheel 41 is larger than 100 mm.

When control device 500 receives signal #3 from second sensor 72, it sets upper limit value U of the rotation speed of tool spindle 13 to 20,000/min. (first upper limit value) and controls the rotation speed of tool spindle 13 not to exceed 20,000/min. When control device 500 receives signal #4 from second sensor 72, it sets upper limit value U of the rotation speed of tool spindle 13 to 12,000/min. (second upper limit value) and controls the rotation speed of tool spindle 13 not to exceed 12,000/min.

Second sensor 72 includes light emitter 721 that emits a laser beam and light receiver 722 that receives the laser beam. When light receiver 722 receives the laser beam, second sensor 72 outputs signal #3 to control device 500. When light receiver 722 does not receive the laser beam, second sensor 72 outputs signal #4 to control device 500.

According to such a configuration as well, the rotation speed of grinding wheel 41 is automatically controllable to be equal to or lower than allowable rotation speed S determined in accordance with diameter D of grinding wheel 41.

(5) Though the diameter of grinding wheel 41 is described above with reference to diameter D, without being limited thereto, a radius of grinding wheel 41 may be adopted.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

This application is based on Japanese Patent Applications Nos. 2025-073171 and 2026-016805 filed with the Japan Patent Office on April 25, 2025 and February 4, 2026, respectively, the entire contents of which are hereby incorporated by reference.

## Claims

1. A machine tool (100) comprising:
a spindle (13) that rotates a grinding wheel (41) that grinds a workpiece (W);
a control device (500) that controls a rotation speed of the spindle (13); and
a sensor (70, 80) that outputs a first signal to the control device (500) when a diameter of the grinding wheel (41) is equal to or smaller than a predetermined threshold value and outputs a second signal different from the first signal to the control device (500) when the diameter of the grinding wheel (41) is larger than the threshold value, wherein
when the control device (500) receives the first signal from the sensor (70, 80), the control device sets an upper limit value of the rotation speed to a first upper limit value and controls the rotation speed not to exceed the first upper limit value,
when the control device (500) receives the second signal from the sensor (70, 80), the control device sets the upper limit value of the rotation speed to a second upper limit value smaller than the first upper limit value and controls the rotation speed not to exceed the second upper limit value,
an allowable rotation speed (S) of the grinding wheel (41) is lower as the diameter of the grinding wheel (41) is larger, and
the first upper limit value is a value equal to or smaller than the allowable rotation speed (S) when the diameter of the grinding wheel (41) is equal to the threshold value.

2. The machine tool (100) according to claim 1, wherein
the grinding wheel (41) includes
a shank portion (412) that extends like a rod around a prescribed axis (904) and rotates around the prescribed axis (904), and
a main body portion (411) attached to the shank portion (412), the main body portion grinding the workpiece (W), and
the sensor (70, 80) emits a laser beam to the main body portion (411), in parallel to the prescribed axis (904).

3. The machine tool (100) according to claim 2, further comprising:
an automatic tool changer (53);
a tool magazine (51) where the grinding wheel (41) can be accommodated; and
a conveyance apparatus (52) that conveys the grinding wheel (41) from the tool magazine (51) to a tool stand-by position of the automatic tool changer (53), wherein
the sensor (70) emits the laser beam to the grinding wheel (41) conveyed to the tool stand-by position.

4. The machine tool (100) according to claim 3, wherein
the main body portion (411) includes
an outer circumferential surface (4111) that comes in contact with the workpiece (W) in grinding of the workpiece (W), and
a surface (4113) that is contiguous to the outer circumferential surface (4111) and extends in a radial direction of the grinding wheel (41), and
the sensor (70) emits the laser beam toward the surface (4113).

5. The machine tool (100) according to claim 4, wherein
the sensor (70, 80) includes a light emitter (711, 721, 81) that emits a laser beam and a light receiver (712, 722, 82) that receives the laser beam,
when the light receiver (712, 722, 82) receives the laser beam, the sensor (70, 80) outputs the first signal to the control device (500), and
when the light receiver (712, 722, 82) does not receive the laser beam, the sensor (70, 80) outputs the second signal to the control device (500).

6. The machine tool (100) according to any one of claims 1 to 5, wherein
when the diameter of the grinding wheel (41) is equal to the threshold value, the allowable rotation speed (S) is higher than a highest rotation speed of the spindle (13), and
when the control device (500) receives the first signal from the sensor (70, 80), the control device sets the highest rotation speed as the first upper limit value.

7. The machine tool (100) according to any one of claims 3 to 5, wherein
the second upper limit value is a value equal to or smaller than the allowable rotation speed (S) when the diameter of the grinding wheel (41) is a maximum diameter up to which the grinding wheel (41) is replaceable by the automatic tool changer (53).

8. A method of controlling a machine tool (100) comprising:
controlling, by a control device (500), a rotation speed of a spindle (13) that rotates a grinding wheel (41) that grinds a workpiece;
outputting, by a sensor (70, 80), a first signal to the control device when a diameter of the grinding wheel (41) is equal to or smaller than a predetermined threshold value; and
outputting, by the sensor (70, 80), a second signal different from the first signal to the control device (500) when the diameter of the grinding wheel (41) is larger than the threshold value, wherein
the controlling a rotation speed includes
setting, by the control device (500), an upper limit value of the rotation speed to a first upper limit value and controlling, by the control device (500), the rotation speed not to exceed the first upper limit value, based on output of the first signal from the sensor (70, 80), and
setting, by the control device (500), the upper limit value of the rotation speed to a second upper limit value smaller than the first upper limit value and controlling, by the control device (500), the rotation speed not to exceed the second upper limit value, based on output of the second signal from the sensor (70, 80),
an allowable rotation speed of the grinding wheel (41) is lower as the diameter of the grinding wheel (41) is larger, and
the first upper limit value is a value equal to or smaller than the allowable rotation speed when the diameter of the grinding wheel (41) is equal to the threshold value.
